# EUROPEAN PATENT APPLICATION

(11) **EP 1 110 449 A1**
(43) Date of publication of application: **27.06.2001**
(21) Application number: 00305947.4
(22) Date of filing: 13.07.2000
(51) Int. Cl.: A01K 89/01

(54) **Asymmetrically joined spinning reel foot and stem**

(30) Priority: 21.12.1999 US 469205
(71) Applicant: BRUNSWICK CORPORATION, Lake Forest, Illinois 60045-4811 (US)
(72) Inventor: Kang, Young Jue, Tulsa, Oklahoma 74134-5703 (US); Cockerham, Rayford A., Broken Arrow, Oklahoma 74012 (US); Robbins, Richard J., Derby, Kansas 67037 (US)
(74) Representative: Thomson, Paul Anthony

(57) **Abstract**

According to the preferred embodiment of the instant invention, there is provided a fishing reel, wherein the reel stem is connected to the reel foot at a point other than at its center. When the point of connection is nearer the rear of the rod, the net effect is to move the overall center of gravity of the rod/reel combination nearer the user's hand, i.e., toward the handle of the rod. Further, in the preferred arrangement, when the reel stem asymmetrically engages the reel foot the user will tend to put the stem between the index and middle fingers, thereby moving the hand grip position toward the tip of the reel and nearer the location of the center of gravity.

## Description

### FIELD OF THE INVENTION

The present invention relates to the general subject matter of fishing reels, and more particularly, to various arrangements of the reel foot and stem combination.

### BACKGROUND OF THE INVENTION

As is well known to those in the art, in general operation a fisherman ties some sort of object (e.g., a fishing lure) to one end of a long continuous piece of fishing line, the other end of which is secured to a spindle or spool inside of the fishing reel. Between the lure and the spool, the line from the fishing reel spool is threaded through guide rings of generally increasing diameter along the length of a rod. The excess fishing line is wrapped about this same spool. In normal operation, the selected object and the line attached thereto are cast into the water, with line from within the reel being smoothly released from the reel so as to impede as little as possible the flight of the cast object. Then, the line is recalled back into the device through the use of a handle or crank that turns the spool from which the line was originally sourced, thereby winding it once again about the spool. Of course, in the preferred scenario a fish will be attached to the remote end of the line when it is so-recalled.

The spinning reel portion of a rod and reel combination typically comprises: an elongate mounting foot; a reel body; and a reel stem (or "leg" as it is sometimes referred to in the argot of the trade) extending between the mounting foot and the reel body. Conventionally, the mounting foot and stem cooperatively form a T shape, wherein the stem bisects the foot along its longitudinal length. When it is installed on a rod, the mounting foot of the reel is placed in contact with a reel seat on the rod and removably secured thereto by any number of different means, e.g., a locking nut or ring is a popular choice. Examples of prior art rod seats may be found in U.S. Letters Patent 4,187,633, 4,860,484, 4,905,400, and 5,904,000, the disclosures of which are incorporated herein by reference.

During the process of casting and retrieving the fishing line, the fisherman / fisherwoman will typically hold the rod and reel combination by placing his or her index and middle fingers beneath the rod on opposite sides of the reel stem and using the index and middle fingers to hold the fishing rod portion against the palm of the hand. This arrangement is comfortable for most users because, when the hand is so positioned, the index finger is in a position to secure the line during the rearward component of the casting motion and then to release it at some point during the forward (or throwing) motion component.

Needless to say, the overall balance of the rod and reel combination can contribute to (or detract from) the user's casting motion, subsequent line retrieval, and overall enjoyment of the fishing experience. In most cases, the center of gravity of the combination is located somewhere in front of the user's normal hand position (i.e., between the user's hand and the tip of the rod). Of course, it is difficult to state with any specificity the location of the center of gravity, because of the enormous number of rod and reel combinations that are available to the end user, the location of the center of gravity generally depending on the relative weights of the rod and reel and the center of gravity of the rod alone. That being said, however, as a general rule the center of gravity in most cases is in front of the normal gripping position.

The fact that the center of gravity of the rod/reel combination tends to be ahead of the user's gripping hand has a number of consequences for the user. First, and as is predicted by basic physics, as the center of gravity moves forward toward the tip of the rod, the user will find it increasingly more difficult to accelerate the rod tip during casting. Further, once the rod is placed into motion (as during a cast), the user will have to exert more force to stop it. Still further, as the center of gravity moves forward, the user will find it increasingly difficult to main the rod in a horizontal position, and will need to apply increasing restoring force to keep it level. Finally, to the extent that a rod is "tip heavy", the ability of users to"feel" their bait and fish strikes is reduced. This is because when the rod is tip heavy much of what a fisherman feels is the downward force of the rod tip so that the feel of the bait, bottom structure, and fish strikes is masked (and lessened) by the downward force of the fishing rod as it seeks to rotate about its point of support in the user's hand.

All of this force, of course, is applied through the user's wrist and, if the balance of the combination is sufficiently loaded toward the forward end of the rod, the user's hand may tire prematurely, which is affect adversely the fishing experience. Clearly, it is desirable and advantageous to have the center of gravity near the user's hand and, in many cases, located within the span of the gripping hand.

Of course, one obvious method of adjusting the location of the center of gravity of the rod and, thus, the combination is to modify its weight distribution by adding weight to the handle of the rod. Examples of this approach may be found in U.S. Letters Patent 5,535,539 and 5,355,611, the disclosures of which are incorporated herein by reference. However, adding weight to the rod in an attempt to change its balance has the adverse consequence of increasing the overall weight of the rod which, itself, may result in hand tiring.

Further, some rods provide a plurality of positions at which the reel may be located. However, in those cases it is up the user to position the reel mounting foot against the reel seat so as to balance the resulting combination as nearly as possible. Most users will not want to devote the time required to perform this task, as it could require balancing the combination via trial-and-error.

Thus, what is needed is a way of relocating the center of gravity of rod / reel combination to a position nearer the user's holding hand. Further, this method must not be highly dependent upon the weight characteristics of the individual components.

Heretofore, as is well known in the fishing arts, there has been a need for an invention to address and solve the above-described problems. Accordingly, it should now be recognized, as was recognized by the present inventor, that there exists, and has existed for some time, a very real need for a device that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of this invention within the ambit of the appended claims.

### SUMMARY OF THE INVENTION

According to a preferred aspect of the instant invention, there is provided a reel foot / stem combination that are joined together in an asymmetric arrangement. In more particular, in the preferred embodiment a fishing reel is provided, wherein the reel stem is connected to the reel foot at a point other than at its center. When the point of connection is nearer the rear of the rod, the net effect is to move the overall center of gravity of the rod/reel combination nearer the user's hand. (The directions "forward" and "rearward" are defined herein with respect to the rod tip and rod handle, respectively). Further, in the preferred arrangement, when the reel stem asymmetrically engages the reel foot the user will tend to put the stem between the middle fingers, thereby moving the hand toward the tip of the reel and nearer the location of the center of gravity.

The foregoing has outlined in broad terms the more important features of the invention disclosed herein so that the detailed description that follows may be more clearly understood, and so that the contribution of the instant inventor to the art may be better appreciated. The instant invention is not to be limited in its application to the details of the construction and to the arrangements of the components set forth in the following description or illustrated in the drawings. Rather, the invention is capable of other embodiments and of being practiced and carried out in various other ways not specifically enumerated herein. Additionally, the disclosure that follows is intended to cover all alternatives, modifications and equivalents as may be included within the spirit and scope of the invention as defined by the appended claims. Further, it should be understood that the phraseology and terminology employed herein are for the purpose of description and should not be regarded as limiting, unless the specification specifically so limits the invention. Further objects, features, and advantages of the present invention will be apparent upon examining the accompanying drawings and upon reading the following description of the preferred embodiments.

### BRIEF DESCRIPTION OF THE DRAWTNGS

Figure **1** provides an elevational side view of a conventional spinning reel removably secured beneath a fishing rod **10**.

Figure **2** contains a side perspective view of an inventive spinning reel frame **50** from the palm side of a preferred reel foot / stem arrangement.

Figure **3** is a side plan view of the inventive reel foot / stem arrangement.

### DETAILED DESCRIPTION OF THE PREFERRED EMBODIMENTS

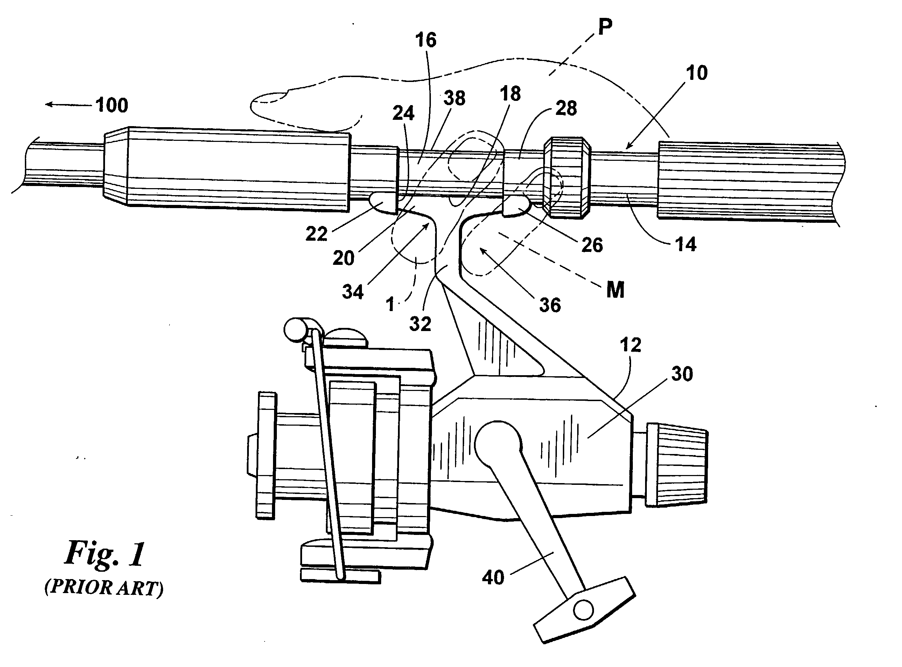

In Figure **1**, a conventional fishing rod **10** is shown with a conventional under-the-rod type spinning reel **12** mounted thereon. The fishing rod **10** has an elongate body **14** that has a mounting region at **16** which defines a seating surface **18** for the elongate mounting foot **20** of the fishing reel **12**. The forward portion **22** of the mounting foot **20** seats in a receptacle **24** defined on the fishing rod **10**. The rear portion **26** of the mounting foot **20** is maintained against the seating surface **18** by a locking ring **28** that is slidable lengthwise on the fishing rod **10** between (a) a release position wherein the fishing reel **12** can be selectively placed in the operative position of Figure **1** and separated from the fishing rod **10** and (b) a locking position, as shown in Figure **1**, wherein the mounting foot **20** is captive in fixed position against the rod surface **18**. This mounting arrangement is common to "under-the-rod" type reels, such as spinning reels, which are well known in the art.

The mounting foot **20** is connected to the body **30** of the fishing reel **12** through a depending mounting stem **32**, which conventionally defines two regions **34** and **36** of equal extent fore and aft of the mounting stem. These regions accommodate the fingers of the user's hand when the mechanism is in use. For a right-handed user as illustrated in Figure **1**, the palm P of the right hand is placed against the upper rod surface **38**. The user's index finger **I** and middle finger **M** are curled underneath the rod **10** to straddle the mounting stem **32**, and draw the rod surface **38** into the palm **P**. This position is maintained both when casting and retrieving the fishing line, the latter being accomplished by rotating the reel's crank handle **40** using the non-gripping (e.g., left) hand. Figure **1** pictures the traditional foot **20** / stem **32** arrangement, wherein the stem **32** bisects the foot **20**.

Typically, the mounting foot **20**, mounting stem **32**, and reel body **30** are made from a hard material, such as metal, plastic, or a composite. In the a conventional configuration such as this, the center of gravity of the combined rod **10** and reel **12** combination is somewhere ahead of the user's hand in the direction of the rod tip **100** (not shown).

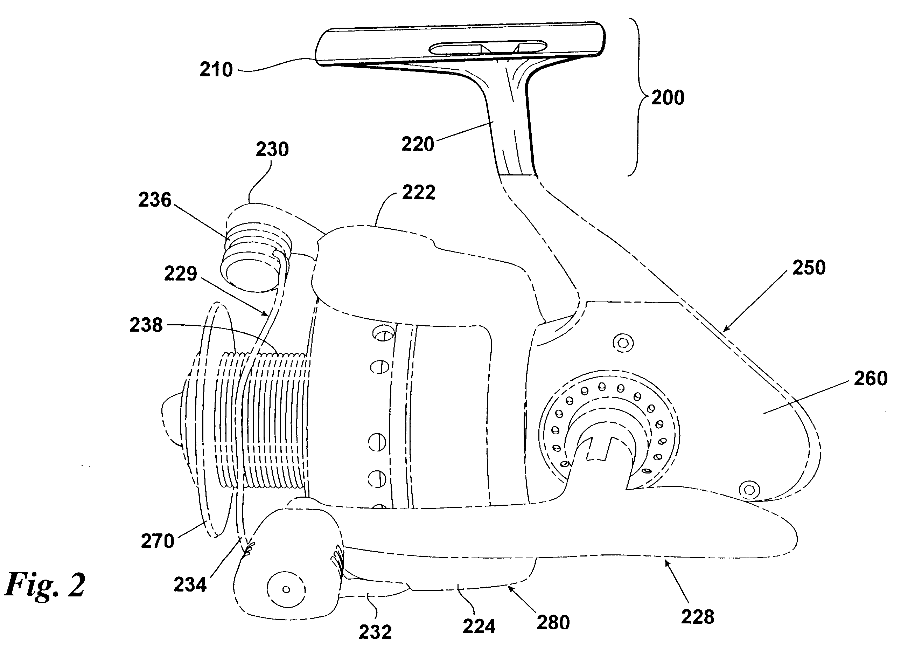

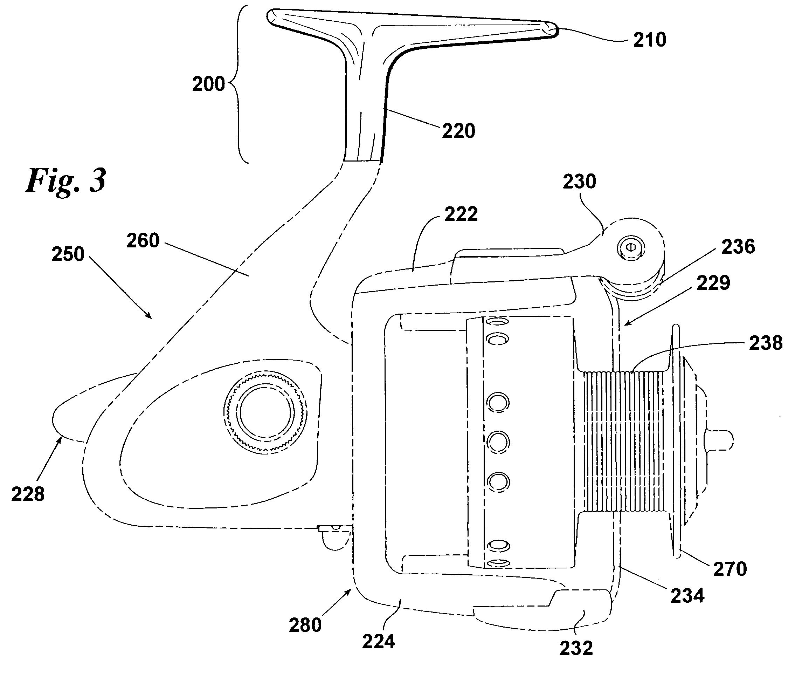

According to a preferred aspect of the instant invention and as is pictured in Figures **2** and **3**, there is provided a spinning reel mounting device **200**, wherein the reel stem **220** is asymmetrically joined to a reel foot **210**. In these figures, a spinning style fishing reel **250** is shown, which reel **250** is of the type suitable for use with the present invention. The reel **250** consists of a fixed housing **260** with an integral mounting stem **220** with a foot **210** thereon suitable for attachment to a conventional fishing rod **10**.

As is customary for this general sort of reel, a spool **270** is provided at the front of the reel **250** that holds a supply of fishing line. To effect wrapping of the line around the spool **270** during recall of the line, a rotor **280** is provided. The rotor **280** has diametrically opposed bail ears **222**, **224** which rotate about a longitudinal, fore and aft axis of the reel **250**, i.e., an axis generally parallel to the central axis of the spool **270.** This rotation is imparted by turning a conventional external crank handle **228** through a mechanism well known to those skilled in the art. (See, for example, the mechanisms disclosed in U.S. Letters Patent 5,143,318, 5,921,489, and, 5,350,131, the disclosures of which are incorporated herein by reference.)

The bail ears **222**, **224** cooperatively define a support for a pivotable bail assembly **229** consisting of spaced bail arms **230**, **232** and a formed wire bail **234** connecting therebetween. As the rotor **280** is operated, a line guide **236** on the bail assembly **229** engages the line and wraps the line around the hub **238** of the spool **270**. Because the line guide **236** preferably has a fixed axial position with respect to the reel as it is operating, it is necessary to reciprocate/oscillate the spool **270** about the fore and aft reel axis to cause an even distribution of line on the spool **270** during retrieval.

The mounting device **200** of the instant invention has the stem **220** joined to the foot **210** at a position toward the rear of the reel **250**, i.e., behind the longitudinal midpoint of the foot **210**, wherein the longitudinal midpoint is simply the midpoint of the foot **210** as measured between its forward and rearward tips. Of course, as the jointing point between the stem **220** and foot **210** is moved toward the rear of the foot **210**, the center of gravity of the combined rod **10** and reel **250** combination similarly moves toward the rear of the rod **10** (i.e., away from the rod tip **100**) and toward the user's hand. Additionally, most users will find it more comfortable to place the asymmetrically joined stem **220** between the middle M and fourth fingers, rather than between the index **I** and middle **M** fingers, thus shifting the user's hold upward on the rod **10** and nearer to the center of gravity. Finally, since most users prefer to keep the index finger **I** proximate to the spool **238** so that the line may be readily seized when casting, that factor additionally encourages the user to position the stem **220** of the instant reel mounting device **200** between the middle and fourth fingers.

Of course, there are practical limitations to how far rearward the point of intersection of these two elements can be moved because, for example, at least some of the foot **210** must be available for mounting the reel **250** on the rod **10**. Additionally, ergometric design considerations should be taken into account and it may be that, depending on the particular rod and reel involved, that attachment positions short of the most rearward could provide a better feel for the end user.

Finally, although the instant invention has been pictured only as being arranged with the stem **220** located toward the rear of the foot **210**, those skilled in the art recognize that it could alternatively be placed ahead of the foot **210** centerline. However, that would tend to move the center of gravity of the rod and reel toward the tip of the rod which, in most applications, would not be particularly desirable. That being said, depending on the rod, this arrangement might be desirable where, for example, the rod had a heavy handle relative to the rest of the rod.

While the inventive device has been described and illustrated herein by reference to certain preferred embodiments in relation to the drawings attached hereto, various changes and further modifications, apart from those shown or suggested herein, may be made therein by those skilled in the art, without departing from the spirit of the inventive concept, the scope of which is to be determined by the following claims.

## Claims

1. A reel mounting device, comprising an under-the-rod type fishing reel including a foot structure for securing said fishing reel on a fishing rod, said foot structure having a longitudinal midpoint, a reel body, and a reel stem extending between said foot structure and said reel body, wherein said reel stem is joined to said foot.structure at a point substantially different from said longitudinal midpoint.

2. A rod mounting device according to Claim **1**, wherein said foot structure has a forward tip and a rearward tip, and wherein said reel stem is joined to said foot structure at a point nearer to said reward tip than to said forward tip.

3. A reel mounting device, comprising:
(a) a fishing reel body having an upper surface;
(b) a foot structure for securing said fishing reel body to a fishing rod seat, said foot structure having a longitudinal midpoint; and,
(c) a reel stem having an upper terminus and a lower terminus, said lower terminus joined to said fishing reel upper surface, and said upper terminus joined to said foot structure at a point different from said longitudinal midpoint.

4. A real mounting device according to Claim **3**, wherein said foot structure has a forward terminus and a rearward terminus, and wherein said reel stem is joined to said foot structure at a point nearer said rearward terminus than to said forward terminus.
(b) a reel stem having an upper end and a lower end, said joined to said

5. An apparatus for fishing, comprising:
(a) a rod, said rod having a reel seat;
(b) a housing;
(c) a line carrying spool,
(d) a rotor mounted for rotation relative to said housing and for directing fishing line onto said spool;
(e) a rotatable crank handle for operating said rotor; and,
(f) a reel mounting device for mounting said fishing reel on said rod, said real mounting device having
(1) a mounting foot for engaging said reel seat of said rod, said mounting foot having a longitudinal midpoint, and,
(2) a reel stem having a lower terminus and an upper terminus, said lower terminus joined to said housing, and, said upper terminus joined to said mounting foot at a point different from said longitudinal midpoint.

6. A fishing reel according to Claim **5**, wherein said mounting foot has a rearward end, and wherein said reel stem is joined to said mounting foot at a point between said longitudinal midpoint and said rearward end.
